# EUROPÄISCHE PATENTSCHRIFT

(11) **EP 1 503 105 B1**
(45) Veröffentlichungstag und Bekanntmachung des Hinweises auf die Patenterteilung: **11.11.2009**
(21) Anmeldenummer: 04017282.7
(22) Anmeldetag: 22.07.2004
(51) Int. Cl.: F16F 15/14, F01L 1/46, F01L 1/047

(54) **Nockenwellendämpfer**
Camshaft damper
Amortisseur pour arbre à cames

(30) Priorität: 28.07.2003 DE 10334311
(43) Veröffentlichungstag der Anmeldung: 02.02.2005
(73) Patentinhaber: LuK Lamellen und Kupplungsbau Beteiligungs KG, 77815 Bühl (DE)
(72) Erfinder: Lehmann, Steffen, 76275 Ettlingen (DE); Fechler, Christian, 76135 Karlsruhe (DE); Sieber, Dimitri, 76187 Karlsruhe (DE)

(56) Entgegenhaltungen:
- WO-A-00/46524
- GB-A- 491 717
- US-A- 1 916 086
- US-A- 5 879 237
- US-A- 5 908 099

## Beschreibung

Die Erfindung betrifft einen Nockenwellendämpfer zur Dämpfung von Drehschwingungen im Steuertrieb einer Brennkraftmaschine, wobei dieser mehrere schwingende Massen aufweist, die wenigstens einen Massenring umfassen und über vorgespannte Druckfedern aus Metall an einer Flanscheinrichtung abgestützt sind.

Ein solcher Nockenwellendämpfer ist durch die DE 196 23 627 A1 bekannt geworden.

Es sind auch Nockenwellendämpfer bekannt mit Dämpferelementen aus Gummi. Die Dämpferelemente aus Gummi haben den Nachteil, dass ihr Dämpfungsverhalten stark temperaturabhängig ist. Das ist bei einer Verwendung des Nockenwellendämpfers in einem Kraftfahrzeugmotor unerwünscht, da dieser witterungs- und betriebsbedingt starken Temperaturschwankungen ausgesetzt wird.

Aufgabe der Erfindung ist es, einen Nockenwellendämpfer zur Dämpfung von Drehschwingungen im Steuertrieb einer Brennkraftmaschine zu schaffen, der bei starken Temperaturschwankungen konstante Dämpfungseigenschaften aufweist.

Die Aufgabe wird bei einem Nockenwellendämpfer zur Dämpfung von Drehschwingungen im Steuertrieb einer Brennkraftmaschine, der mehrere schwingende Massen aufweist, die über vorgespannte Druckfedern aus Metall, insbesondere Stahtfedem, an einer Flanscheinrichtung abgestützt sind, dadurch gelöst, dass der Massering einen kreisringscheibenförmigen Grundkörper aufweist, der mit mehreren Durchgangslöchern zur Befestigung von Verbindungsbolzen versehen ist, die drehfest mit einer Mitnehmerscheibe verbunden sind. Über die Verbindungsbolzen wird eine Bewegung des Masserings auf die Mitnehmerscheibe übertragen und umgekehrt. Die Druckfedern sind vorzugsweise als Schraubendruckfedern aus Stahl gebildet, oder zumindest aus einem Metall, dessen Federeigenschaften wenig temperaturabhängig sind. Die Verwendung von Stahlfedern liefert darüber hinaus den Vorteil, dass sie im Ölraum der Brennkraftmaschine untergebracht werden können. Das ist mit Dämpferelementen aus Gummi nicht möglich, da der Gummi vom Öl angegriffen wird.

Ein bevorzugtes Ausführungsbeispiel des Nockenwellendämpfers ist **dadurch gekennzeichnet, dass** die Flanscheinrichtung aus mehreren Blechteilen gebildet ist. Die Blechteile liefern den Vorteil, dass sie einfach und kostengünstig herstellbar sind. Die Blechteile können zum Beispiel aus gezogenem Blech hergestellt sein. Einzelne Bereiche der Blechteile, wie Bohrungen oder Aussparungen, können ausgestanzt sein. Es ist auch möglich, einzelne Bereiche der Blechteile spanend zu bearbeiten.

Ein weiteres bevorzugtes Ausführungsbeispiel des Nockenwellendämpfers ist **dadurch gekennzeichnet, dass** die Flanscheinrichtung zwei Flanschteile umfasst, zwischen denen die Mitnehmerscheibe angeordnet ist. Die Flanschteile dienen dazu, die Mitnehmerscheibe, die sich relativ zu den Flanschteilen verdrehen kann, zu führen.

Ein weiteres bevorzugtes Ausführungsbeispiel des Nockenwellendämpfers ist **dadurch gekennzeichnet, dass** in den Flanschteilen und in der Mitnehmerscheibe jeweils mindestens eine längliche Aussparung ausgebildet ist, die tangential so angeordnet ist, dass die Aussparungen in den Flanschteilen und der Mitnehmerscheibe im zusammengebauten Zustand des Nockenwellendämpfers miteinander fluchten. Die Aussparungen, die auch als Fenster bezeichnet werden, dienen zur Aufnahme von Druckfedern, durch welche die Mitnehmerscheibe mit den Flanschteilen gekoppelt ist.

Ein weiteres bevorzugtes Ausführungsbeispiel des Nockenwellendämpfers ist dadurch gekennzeichnet, dass die Flanschteile radial innen jeweils einen Ringflansch mit mehreren Durchgangslöchern aufweisen. Die Ringflansche dienen einerseits zur Befestigung der beiden Flanschteile aneinander. Andererseits dienen die Ringflansche dazu, die Flanschteile an der Nockenwelle zu befestigen. Durch diese Befestigung wird eine Drehbewegung der Nockenwelle auf den Nockenwellendämpfer übertragen.

Ein weiteres bevorzugtes Ausführungsbeispiel des Nockenwellendämpfers ist dadurch gekennzeichnet, dass die Flanschteile Durchganglöcher für die Verbindungsbolzen aufweisen, wobei der Innendurchmesser der Durchgangslöcher deutlich größer als der Außendurchmesser der Verbindungsbolzen ist. Die Durchgangslöcher ermöglichen, dass sich die Verbindungsbolzen quer zu ihrer Längsachse bewegen können. Dadurch wird eine Bewegung der Mitnehmerscheibe und des damit gekoppelten Masserings relativ zu den Flanschteilen ermöglicht. Durch die Abmessungen der Durchgangslöcher wird die Bewegung der Mitnehmerscheibe und des Masserings relativ zu den Flanschteilen begrenzt.

Ein weiteres bevorzugtes Ausführungsbeispiel des Nockenwellendämpfers ist dadurch gekennzeichnet, dass zwischen der Flanscheinrichtung und dem Massenring ein Gleitlager- und/oder Reibring angeordnet ist. Der Ring hat vorzugsweise einen im Wesentlichen L-förmigen Querschnitt und kann mindestens eine axiale Reibfläche aufweisen, durch welche eine Bewegung des Masserings relativ zu der Flanscheinrichtung erschwert wird. Der Ring kann auch eine radiale Gleitfläche aufweisen, durch welche eine Bewegung des Masserings relativ zu der Flanscheinrichtung erleichtert wird

Ein weiteres bevorzugtes Ausführungsbeispiel des Nockenwellendämpfers ist dadurch gekennzeichnet, dass zwischen der Flanscheinrichtung und dem Massering, insbesondere zwischen dem Gleitlager- und/oder Reibring und dem Massering, eine Tellerfeder eingespannt ist. Die Tellerfeder dient dazu, die Reibung zwischen den aneinander anliegenden und relativ zueinander beweglichen Teilen zu erhöhen.

Ein weiteres bevorzugtes Ausführungsbeispiel des Nockenwellendämpfers ist dadurch gekennzeichnet, dass zwischen der Tellerfeder und dem Massering ein Stützring angeordnet ist. Vorzugsweise sind an dem Stützring Noppen ausgebildet, die in komplementäre Aussparungen in dem Massering eingreifen, um eine drehfeste Verbindung zwischen dem Stützring und dem Massering zu gewährleisten.

Die oben angegebene Aufgabe ist bei einer Nockenwelle für Brennkraftmaschinen durch die Verwendung eines vorab beschriebenen Nockenwellendämpfers gelöst.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine Explosionsdarstellung des erfindungsgemäßen Nockenwellendämpfers;
- Figur 2: eine teilweise geschnittene, perspektivische Darstellung des Nockenwellendämpfers aus Figur 1 und
- Figur 3: den Nockenwellendämpfer aus den Figuren 1 und 2 im Schnitt.

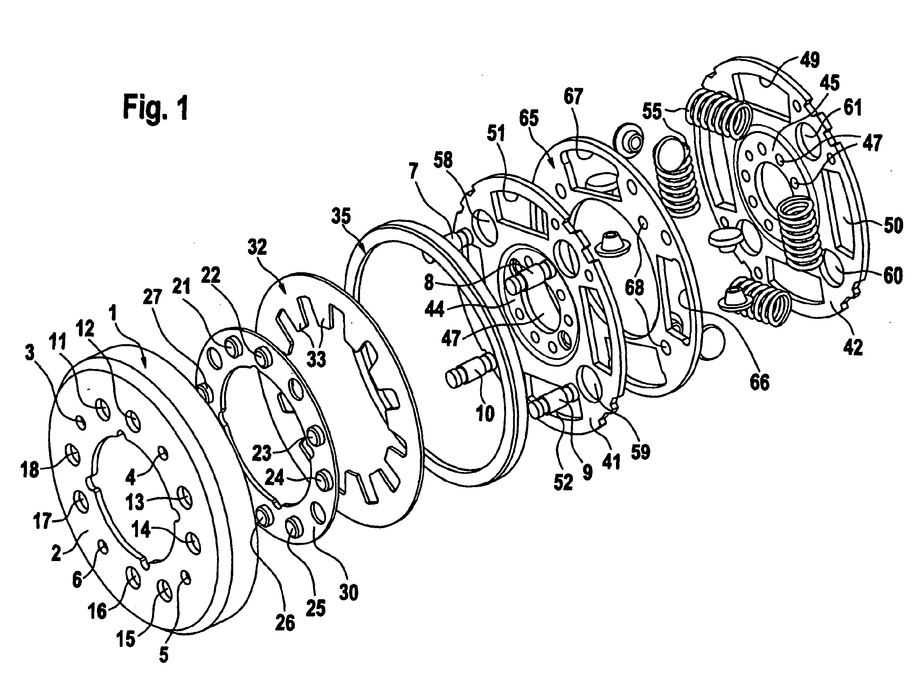

Der in den Figuren 1 bis 3 in verschiedenen Ansichten dargestellte Nockenwellendämpfer umfasst einen Massering 1, der einen im Wesentlichen kreisringscheibenförmigen Grundkörper 2 aufweist, dessen umlaufender Rand in einem Winkel von etwa 90 Grad abgewinkelt ist. In dem Grundkörper 2 des Masserings 1 sind vier Durchgangslöcher 3, 4, 5, 6 vorgesehen, die zur Befestigung von Verbindungsbolzen 7, 8, 9, 10 dienen. Außerdem sind in dem Grundkörper 2 des Masserings 1 acht Durchgangslöcher 11 bis 18 zur Aufnahme von Noppen 21 bis 28 vorgesehen, die an einem Stützring 30 ausgebildet sind, der eine im Wesentlichen kreisringscheibenförmige Gestalt aufweist. An dem Stützring liegt eine Tellerfeder 32 an, die eine im Wesentlichen kreisringscheibenförmige Gestalt aufweist, von der sich radial nach innen eine Vielzahl von Zungen 33 erstreckt. An der dem Stützring 30 abgewandten Seite der Tellerfeder 32 liegt ein Gleitlager- /Reibring 35 mit einem L-förmigen Querschnitt an.

Auf der der Tellerfeder 32 abgewandten Seite des Gleitlager- Reibrings 35 liegt eine Flanscheinrichtung an, die ein erstes Flanschteil 41 und ein zweites Flanschteil 42 umfasst. Radial innen ist das erste Flanschteil 41 durch einen Flansch 44 und das zweite Flanschteil 42 durch einen Flansch 45 begrenzt. Die Flansche 44, 45 weisen mehrer Durchgangslöcher 46, 47 auf, die gleichmäßig über den Umfang des Flansches 44, 45 verteilt sind. Radial außerhalb der Flansche 44, 45 sind die Flanschteile 41, 42 mit Fenstern 49 bis 52 versehen, die zur Aufnahme von Druckfedern 55 dienen. Bei den Druckfedern 55 handelt es sich um Schraubendruckfedern aus Stahl. An den Enden der Schraubendruckfedern 55 werden Scheiben aus Kunststoff eingesetzt, die zur Geräuschdämpfung dienen.

Darüber hinaus sind in den Flanschteilen 41, 42 Durchgangslöcher 58 bis 61 jeweils zwischen zwei Fenstern angeordnet. Die Durchgangslöcher 58 bis 61 weisen einen deutlich größeren Durchmesser auf als die Verbindungsbolzen 7 bis 10, die im eingebauten Zustand durch die Durchgangslöcher 58 bis 61 hindurchragen. Die Durchgangslöcher 58 bis 61 ermöglichen es, dass sich die Verbindungsbolzen quer zu ihrer Längsausstreckung relativ zu den Flanschteilen 41, 42 bewegen.

Zwischen den beiden Flanschteilen 41 und 42 ist eine Mitnehmerscheibe 65 angeordnet, die einen im Wesentlichen kreisringscheibenförmigen Körper aufweist. Die Mitnehmerscheibe 65 ist mit Fenstern 66, 67 ausgestattet, die im zusammengebauten Zustand des Nockenwellendämpfers mit den Fenstern in den Flanschteilen 41, 42 fluchten. In Umfangsrichtung zwischen den Fenstern 66, 67 sind Durchgangslöcher 68 vorgesehen, die zur Befestigung der Verbindungsbolzen 7 bis 10 dienen.

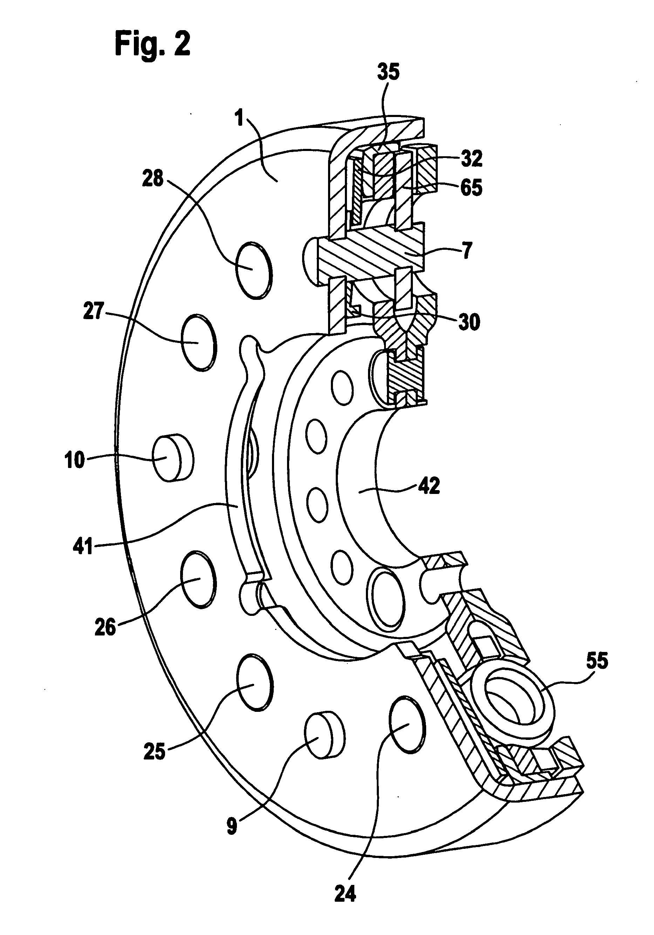

In Figur 2 sieht man, dass der Massering 1 durch die Verbindungsbolzen 7 bis 10 fest mit der Mitnehmerscheibe 65 verbunden ist. Außerdem sieht man in Figur 2, dass die Druckfedern 55 jeweils im Bereich von drei übereinander liegenden beziehungsweise miteinander fluchtenden Fenstern 67, 49, 51 in der Mitnehmerscheibe 65 und den Flanschteilen 41, 42 angeordnet sind.

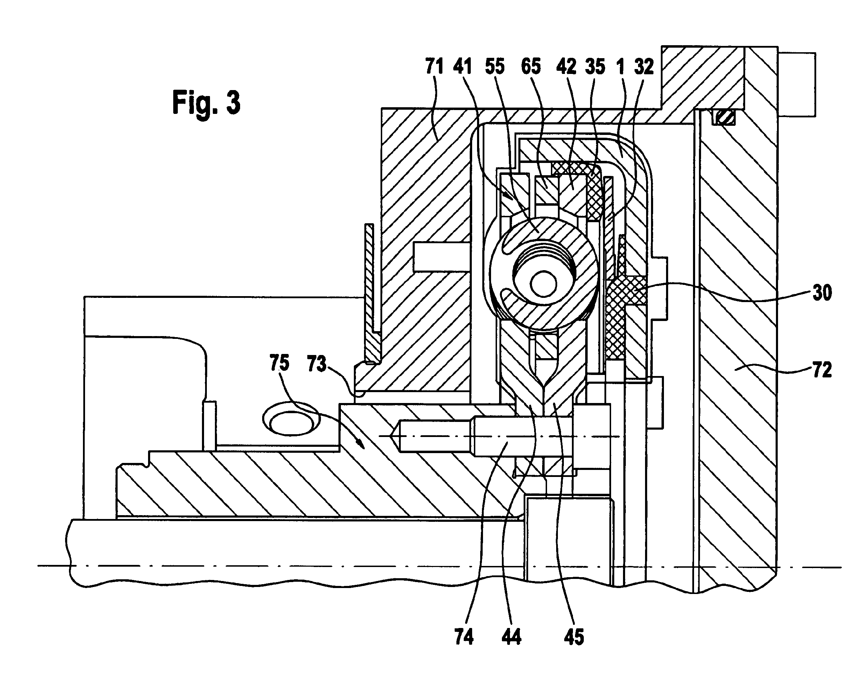

In Figur 3 sieht man, dass der Nockenwellendämpfer ein im Wesentlichen topfförmiges Gehäuse 71 mit einer zentralen Durchgangsöffnung 73 aufweist. Das Gehäuse 71 ist durch einen Gehäusedeckel 72 verschlossen. Außerdem sieht man in Figur 3, dass die Flanschteile 41, 42 durch Schrauben 74, die durch die Flansche 44, 45 hindurchragen, an einer Nockenwelle 75 befestigt sind.

Der in den Figuren 1 bis 3 dargestellte Nockenwellendämpfer wird auf der Nockenwelle parallel zum Kraftfluss im Ölnebel innerhalb des Zylinderkopfbereichs einer Brennkraftmaschine angeordnet. Aus Kostengründen ist der Nockenwellendämpfer hauptsächlich aus Blechteilen gebildet. Die Dämpferfunktion wird über die miteinander vernieteten schwingenden Massen definiert, die sich über die vorgespannten Druckfedern gegen die aus zwei Flanschteilen gebildete Flanscheinrichtung, die mit der Nockenwelle verbunden ist, abstützen. Zwischen den nockenwellenseitig ruhenden und den schwingenden Massen ist die Reibeinrichtung 35 angeordnet, die über die Tellerfeder 32 und entsprechende Reibelemente gebildet wird, wobei der Reibring 35 gleichzeitig als radiales Gleitlager dient. Das heißt, in axialer Richtung hin wirkt der Ring 35 als Reibring und in radialer Richtung als Gleitlager.

## Patentansprüche

1. Nockenwellendämpfer zur Dämpfung von Drehschwingungen im Steuertrieb einer Brennkraftmaschine, wobei dieser mehrere schwingende Massen (1, 30, 32, 35, 65) aufweist, die wenigstens einen Massenring umfassen und über vorgespannte Druckfedern (55) aus Metall an einer Flanscheinrichtung (41,42) abgestützt sind, **dadurch gekennzeichnet, dass** der Massering (1) einen kreisringscheibenförmigen Grundkörper (2) aufweist, der mit mehreren Durchgangslöchern (3 bis 6) zur Befestigung von Verbindungsbolzen (7 bis 10) versehen ist, die drehfest mit einer Mitnehmerscheibe (65) verbunden sind.

2. Nockenwellendämpfer nach Anspruch 1, **dadurch gekennzeichnet, dass** die Flanscheinrichtung aus mehreren Blechteilen (41, 42) gebildet ist.

3. Nockenwellendämpfer nach Anspruch 1 oder 2, **dadurch gekennzeichnet, dass** die Flanscheinrichtung zwei Flanschteile (41, 42) umfasst, zwischen denen die Mitnehmerscheibe (65) angeordnet ist.

4. Nockenwellendämpfer nach Anspruch 3, **dadurch gekennzeichnet, dass** in den Flanschteilen (41, 42) und in der Mitnehmerscheibe (65) jeweils mindestens eine längliche Aussparung (49 bis 52; 66, 67) ausgebildet ist, die tangential so angeordnet ist, dass die Aussparungen (49 bis 52; 66, 67) in den Flanschteilen (41, 42) und der Mitnehmerscheibe (65) im zusammengebauten Zustand des Nockenwellendämpfers miteinander fluchten.

5. Nockenwellendämpfer nach Anspruch 3 oder 4, **dadurch gekennzeichnet, dass** die Flanschteile (41, 42) radial innen jeweils einen Ringflansch (44, 45) mit mehreren Durchgangslöchern (46, 47) aufweisen.

6. Nockenwellendämpfer nach einem der Ansprüche 3 oder 5, **dadurch gekennzeichnet, dass** die Flanschteile (41, 42) Durchganglöcher (58 bis 61) für die Verbindungsbolzen (7 bis 10) aufweisen, wobei der Innendurchmesser der Durchgangslöcher (58 bis 61) deutlich größer als der Außendurchmesser der Verbindungsbolzen (7 bis 10) ist.

7. Nockenwellendämpfer nach einem der Ansprüche 1 bis 6, **dadurch gekennzeichnet, dass** zwischen der Flanscheinrichtung (41, 42) und dem Massering (1) ein Gleitlager- und/oder Reibring (35) angeordnet ist.

8. Nockenwellendämpfer nach einem der Ansprüche 1 bis 7, **dadurch gekennzeichnet, dass** zwischen der Flanscheinrichtung (41, 42) und dem Massering (1), insbesondere zwischen dem Gleitlager- und/oder Reibring (35) und dem Massering (1), eine Tellerfeder (32) eingespannt ist.

9. Nockenwellendämpfer nach Anspruch 8, **dadurch gekennzeichnet, dass** zwischen der Tellerfeder (32) und dem Massering (1) ein Stützring (30) angeordnet ist.

10. Nockenwelle für eine Brennkraftmaschine, mit einem Nockenwellendämpfer nach einem der vorhergehenden Ansprüche.

## Claims

1. Camshaft damper for damping rotary vibrations in the timing drive of an internal combustion engine, with said camshaft damper having a plurality of oscillating masses (1, 30, 32, 35, 65) which encompass at least one mass ring and which are supported on a flange device (41,42) by means of pre-loaded pressure springs (55) composed of metal, **characterized in that** the mass ring (1) has a round annular-disc-shaped basic body (2) which is provided with a plurality of through holes (3 to 6) for fastening connecting bolts (7 to 10) which are rotationally fixedly connected to a driver disc (65).

2. Camshaft damper according to Claim 1, **characterized in that** the flange device is formed from a plurality of sheet-metal parts (41, 42).

3. Camshaft damper according to Claim 1 or 2, **characterized in that** the flange device comprises two flange parts (41, 42) between which the driver disc (65) is arranged.

4. Camshaft damper according to Claim 3, **characterized in that** in each case at least one elongate cutout (49 to 52; 66, 67) is formed in the flange parts (41, 42) and in the driver disc (65), which cutouts are arranged tangentially in such a way that the cutouts (49 to 52; 66, 67) in the flange parts (41, 42) and in the driver disc (65) are aligned with one another in the assembled state of the camshaft damper.

5. Camshaft damper according to Claim 3 or 4, **characterized in that** the flange parts (41, 42) have, radially at the inside, in each case one annular flange (44, 45) with a plurality of through holes (46, 47).

6. Camshaft damper according to one of Claims 3 or 5, **characterized in that** the flange parts (41, 42) have through holes (58 to 61) for the connecting bolts (7 to 10), with the inner diameter of the through holes (58 to 61) being considerably greater than the outer diameter of the connecting bolts (7 to 10).

7. Camshaft damper according to one of Claims 1 to 6, **characterized in that** a plain bearing ring and/or friction ring (35) is arranged between the flange device (41, 42) and the mass ring (1).

8. Camshaft damper according to one of Claims 1 to 7, **characterized in that** a plate spring (32) is braced between the flange device (41, 42) and the mass ring (1), in particular between the plain bearing ring and/or friction ring (35) and the mass ring (1).

9. Camshaft damper according to Claim 8, **characterized in that** a support ring (30) is arranged between the plate spring (32) and the mass ring (1).

10. Camshaft for an internal combustion engine, having a camshaft damper according to one of the preceding claims.

## Revendications

1. Amortisseur pour arbre à cames, pour l'amortissement des oscillations de torsion en mode de commande d'un moteur à combustion interne, celui-ci présentant plusieurs masses oscillantes (1, 30, 32, 35, 65) qui comprennent au moins une bague massique et qui sont supportées par le biais de ressorts de compression précontraints (55) en métal contre un système de brides (41, 42), **caractérisé en ce que** la bague massique (1) présente un corps de base (2) en forme de disque annulaire circulaire qui est pourvu de plusieurs trous de passage (3 à 6) pour la fixation de boulons de connexion (7 à 10) qui sont connectés de manière solidaire en rotation à un disque d'entraînement (65).

2. Amortisseur pour arbre à cames selon la revendication 1, **caractérisé en ce que** le système de brides est formé de plusieurs parties en tôle (41, 42).

3. Amortisseur pour arbre à cames selon la revendication 1 ou 2, **caractérisé en ce que** le système de brides comprend deux parties de brides (41, 42) entre lesquelles est disposé le disque d'entraînement (65).

4. Amortisseur pour arbre à cames selon la revendication 3, **caractérisé en ce que** dans les parties de brides (41, 42) et dans le disque d'entraînement (65) est réalisé à chaque fois au moins un évidement allongé (49 à 52 ; 66, 67), qui est disposé tangentiellement de telle sorte que les évidements (49 à 52 ; 66, 67) dans les parties de brides (41, 42) et le disque d'entraînement (65) soient en alignement les uns avec les autres dans l'état assemblé de l'amortisseur pour arbre à cames.

5. Amortisseur pour arbre à cames selon la revendication 3 ou 4, **caractérisé en ce que** les parties de brides (41, 42) présentent radialement à l'intérieur à chaque fois une bride annulaire (44, 45) avec plusieurs trous de passage (46, 47).

6. Amortisseur pour arbre à cames selon l'une quelconque des revendications 3 ou 5, **caractérisé en ce que** les parties de brides (41, 42) présentent des trous de passage (58 à 61) pour les boulons de connexion (7 à 10), le diamètre intérieur des trous de passage (58 à 61) étant nettement plus grand que le diamètre extérieur des boulons de connexion (7 à 10).

7. Amortisseur pour arbre à cames selon l'une quelconque des revendications 1 à 6, **caractérisé en ce que** l'on dispose entre le système de brides (41, 42) et la bague massique (1) une bague de palier lisse et/ou une bague de friction (35).

8. Amortisseur pour arbre à cames selon l'une quelconque des revendications 1 à 7, **caractérisé en ce qu'**entre le système de brides (41, 42) et la bague massique (1), en particulier entre la bague de palier lisse et/ou la bague de friction (35) et la bague massique (1), est précontraint un ressort Belleville (32).

9. Amortisseur pour arbre à cames selon la revendication 8, **caractérisé en ce que** l'on dispose entre le ressort Belleville (32) et la bague massique (1) une bague de support (30).

10. Arbre à cames pour moteur à combustion interne, comprenant un amortisseur pour arbre à cames selon l'une quelconque des revendications précédentes.
